# EUROPEAN PATENT SPECIFICATION

(11) **EP 2 936 641 B1**
(45) Date of publication and mention of the grant of the patent: **23.11.2016**
(21) Application number: 12890243.4
(22) Date of filing: 20.12.2012
(51) Int. Cl.: H02H 9/00, H02H 9/02, H02H 9/04

(54) **METHOD AND APPARATUS RELATING TO SURGE PROTECTION**
VERFAHREN UND VORRICHTUNG IN ZUSAMMENHANG MIT ÜBERSPANNUNGSSCHUTZ
PROCÉDÉ ET APPAREIL AYANT TRAIT À LA PROTECTION CONTRE LES SURTENSIONS

(43) Date of publication of application: 28.10.2015
(73) Proprietor: Telefonaktiebolaget LM Ericsson (publ), 164 83 Stockholm (SE)
(72) Inventor: ANDERSSON, Arne, 184 95 Ljusterö (SE); TEGNANDER, Hans, 431 35 Mölndal (SE)
(74) Representative: Boco IP Oy Ab
(86) International application number: PCT/SE2012/051451
(87) International publication number: WO 2014/098674

(56) References cited:
- EP-A2- 0 388 022
- WO-A1-2011/073540
- WO-A1-2011/139204
- WO-A1-2011/139204
- DE-A1-102005 046 833
- DE-A1-102005 046 833
- US-A1- 2006 291 118
- US-A1- 2011 026 182

## Description

### TECHNICAL FIELD

The present invention pertains to the field of protection of electrical equipment; in particular the invention is concerned with protection against electrical surges.

### BACKGROUND

Electrical equipment is often subjected to various events, such as lightning or switching operations, that may cause damage from excessive voltages and currents (surges). A so-called surge protective device (SPD) is a device which is used to protect electrical equipment from effects of such events. The SPD is a component which is normally connected at the AC (Alternating Current) or DC (Direct Current) input power terminals of the electrical equipment protected by the SPD. A main purpose of the SPD is to prevent excessive voltages and currents from, for example, the power line to destroy the electronic system or upset its function. The SPD has many uses, e.g. to mitigate surges in both High Voltage and Low Voltage power systems and in communication systems. The SPD is usually designed as a stand alone device that reacts when the voltage over its terminals becomes excessive and diverts the surge current to ground in order to protect the equipment connected downstream of the SPD. The SPD therefore may be seen as having a non-linear voltage-current characteristic that limits voltages exceeding normal safe system levels by a rapid increase in conducted current from a zero level. SPDs are also sometimes referred to as surge protection devices, voltage limiters, over voltage protectors or (surge) arresters.

In many applications, e.g. RBS (Radio Base Station) Main remote applications, output power terminals can be exposed to lightning as well. Hence the same types of difficulties associated with input power terminals above exist also with respect to output power terminals. In these cases, the output power terminals may be protected by SPD(s) as well.

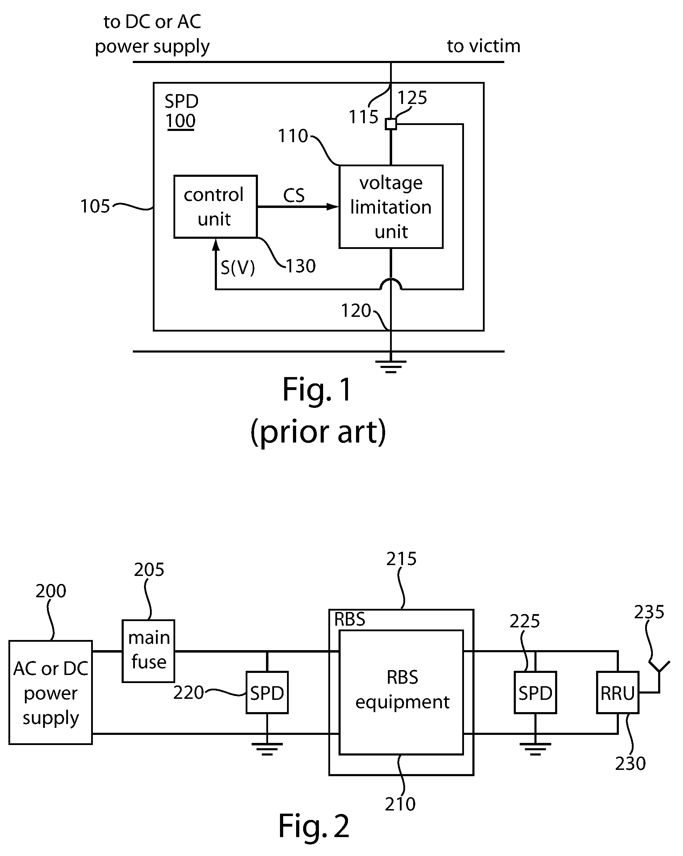

As is customary in the art, the term victim unit (or victim for short) will be used herein to denote any type of electrical equipment that is intended to be protected by one or more SPDs. An exemplary state of the art SPD 100 is illustrated with a block diagram in figure 1. The SPD 100 is here arranged in a housing 105 and comprises a voltage limitation unit 110, which is disposed between a first terminal 115 and a ground terminal 120. During use of the SPD 100, the first terminal 115 may be connected to a line connecting a victim unit with, for example, an AC or DC power supply. The SPD 100 further comprises a voltage sensor 125, which is configured to measure a voltage between the terminals 115 and 120. The voltage measurement performed by the voltage sensor 125 results in a voltage measurement value V. The SPD further comprises a control unit 130, which is connected to the voltage sensor 125. The voltage sensor 125 is configured to generate an information signal S(V) that conveys information about the voltage measurement value V to the control unit 130 via an input terminal. Based on the voltage measurement value V, the control unit 130 decides whether to initiate a voltage limitation in the SPD 100. If the voltage measurement value V indicates that the voltage measured by the voltage sensor 125 is an over voltage, i.e. a voltage which exceeds normal operating voltages, the control unit 130 will initiate a voltage limitation by sending a control signal CS to the voltage limitation unit 110. In response to the control signal CS, the voltage limitation unit 110 will execute a voltage limitation by establishing an efficient channel for an electrical current between the first terminal 115 and the ground terminal 120. The voltage limitation unit 110 will therefore divert a surge current from the victim unit and thereby limit the voltage between the terminals 115 and 120, which in turn will limit a voltage over input (or output) terminals of the victim unit. There are many state of the art technologies available for implementing the voltage limitation unit 120, for example, spark gap (SG) technology, gas discharge tube (GDT) technology, metal oxide varistor (MOV) technology or silicon avalanche diode (SAD) technology.

In figure 1, the state of the art SPD 100 is used to protect a victim unit, which has some associated input impedance. The voltage across the SPD terminals 115 and 120 is determined by voltage division between the input impedance and various other circuit elements which may be present. A functionality of the SPD 100 of figure 1 is therefore to a high degree depending on a loading effect, on the SPD, of the input impedance of the victim unit. If the victim unit has low input impedance, the SPD 100 will be prevented from acting and protecting the victim. That is, the victim unit will clamp the surge voltage to a level where the SPD 100 cannot detect an over voltage. Consequently, the SPD 100 will not operate as intended. Instead, the victim unit will have to absorb the energy and potentially fail in its operation despite of the fact that the SPD 100 has been installed.

One way to try to overcome the above-stated difficulty has been to introduce some form of inductive element in the circuitry between the SPD and the victim; with the aim of raising the voltage over the SPD terminals in the event of a sudden surge current. However, it is often very difficult to find an appropriate inductance value that guarantees that the SPD 100 will work properly and at the same time does not interfere negatively with a normal operation of the victim unit. Moreover, the inductive element leads to increased cost, increased consumption of space and increased power loss.

WO 2011/139204 proposes another way to overcome the above-stated difficulty by allowing the victim unit to trigger the SPD. The victim unit will then, in response to detection of some kind of fault in the victim unit, generate a trig signal which triggers the voltage limitation unit 110 to execute the voltage limitation. This will generally work well but requires of course the voltage limitation unit 110 to execute the voltage limitation. This will generally work well but requires of course that both victim unit and SPD are provided with additional equipment.

EP 0 388 022 A2 which is regarded as closest prior art, discloses a solid state overcurrent protection device which is adapted to detect an overcurrent using a current sensing resistor. A resistor voltage corresponding to an overcurrent flowing through the resistor causes a first transistor to turn on a second transistor which provides a current path and a corresponding voltage limitation. The document points out that overcurrent protection may be preferred to overvoltage protection. For example, it is pointed out that overcurrent protection would generally trigger earlier than overvoltage protection. Nevertheless, the document suggests that the protection device is designed such that an overvoltage condition also triggers the device to produce a voltage limitation.
Consequently, a main problem addressed by the present invention is to overcome or at least mitigate at least one of the above-indicated deficiencies.

### SUMMARY

The above-state problem is solved with a method and a surge protective device according to the independent claims. The method comprises obtaining current measurement value from a measurement of an input or an output current of a victim unit associated with the SPD and a voltage measurement value from a measurement of a voltage over the SPD. The method further includes a step of determining whether to initiate a voltage limitation. Said step comprises comparing the current measurement value with a current threshold value and the voltage measurement value with a first voltage threshold value. Said step further comprises determining to initiate the voltage limitation when the current measurement value exceeds the current threshold value and the voltage measurement value exceeds the first voltage threshold value. The method further comprises initiating the voltage limitation, in case it is determined to initiate the voltage limitation. According to another aspect, the above-stated problem is solved with an SPD configured for having a corresponding operation.

An advantage, as discovered by the inventors, is that the input/output current of a victim unit is much less sensitive to clamping effects compared to the voltage, which was used in the prior art. The detection of a surge condition therefore becomes much more reliable, without having to provide the victim unit with additional equipment. Moreover, as is described in more detail below, to base the determination of when to initiate the voltage limitation on a condition that involves taking into account both current and voltage measurements, in the manner stated above, allows for a more subtle control of when to initiate a voltage limitation. For example, as will be explained in more detail below, in exemplary embodiments, it may be possible to avoid initiating the voltage limitations in situations when other remedies may be preferred.

The persons skilled in the art will appreciate that further objects and advantages are achieved in accordance with exemplary embodiments, which are described and indicated in the subsequent description with reference to the drawings.

### BRIEF DESCRIPTION OF THE DRAWINGS

Figure 1 is a block diagram of an SPD in accordance with the state of the art.
Figure 3a is block diagram illustrating an SPD according to an embodiment of the invention.
Figure 3b is a block diagram illustrating an SPD according to an embodiment of the invention.
Figure 4 is a flowchart illustrating a method for an SPD according to an embodiment of the invention.
Figure 5 is a flowchart illustrating a method for an SPD according to an embodiment of the invention.
Figure 6a is a flowchart illustrating a method for an SPD according to an embodiment of the invention.
Figure 6b is a flowchart illustrating a method for an SPD according to an embodiment of the invention.
Figure 7 is a block diagram illustrating an exemplary control unit for use with embodiments of the invention.

### DETAILED DESCRIPTION

Figure 2 is a block diagram that illustrates a, purely exemplary, scenario where SPDs may be used. In figure 2, radio base station (RBS) equipment 210 in an RBS 215 serves as the victim unit. The RBS equipment 210 may, for example, include circuit boards for digital baseband processing and other tasks. The RBS equipment 210 has a pair of input terminals which are connected to an AC (or DC) power supply 200 and a pair of output terminals which are connected to a so-called remote radio unit (RRU) 230. A main fuse 205 is provided at the power supply 200. The RBS equipment 210 may be subjected to electrical surges, e.g. due to a lightning strike. Such a strike my impact the RBS equipment 210 on any side, i.e. on an input side or an output side. For example, a surge current may be generated by a lighting strike at an antenna 235 connected to the RRU 230. However, a surge current from a lightning strike may also find its way to the RBS equipment 210 via the power supply 200. Consequently, two SPDs 220 and 225 have been provided in order to protect the RBS equipment 210. The SPD 220 is arranged at the input side, and the SPD 225 is arranged at the output side.

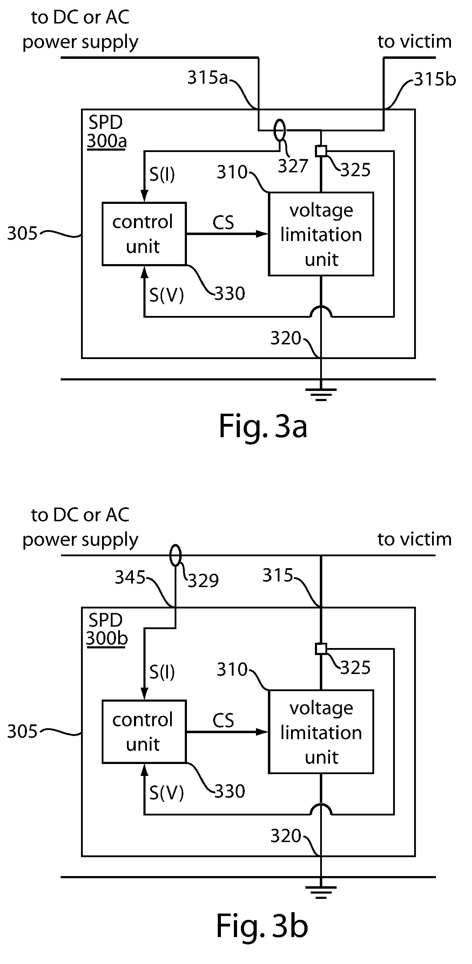

Figures 3a and 3b are block diagrams which illustrate SPD designs according to embodiments of the invention.

In figure 3a, an SPD 300a is arranged in a housing 305 (optional). The SPD 300a has two terminals 315a and 315b in addition to a ground terminal 320. By way of example, the terminal 315a is connected to an AC or DC power supply (not shown) and the terminal 315b is connected to a victim unit (not shown). The SPD 300a comprises an electrically conducting path which connects the terminals 315a and 315b. As a result, an input (or output) current associated with the victim will pass through this path in the SPD 300a. The SPD 300a further comprises a current sensor 327, which is adapted to measure the current going between the terminals 315a and 315b. This measurement results in a current measurement value I, which consequently reflects an input (or an output) current of the victim unit. The current sensor 327 is connected to a control unit 330 of the SPD 300a and adapted to generate a first information signal S(I), which conveys information about the current measurement value I to the control unit 330. The first information signal S(I) may, for example, be an analogue or a digital signal. The SPD 300a further comprises a voltage limitation unit 310, which is here disposed between the terminals 315a and 315b and the ground terminal 320 so that the voltage limitation unit 310 may open a current channel between the terminals 315a and 315b and the ground terminal 320 in order to effect a voltage limitation. In this exemplary embodiment, the SPD 300a also comprises a voltage sensor 325 (optional), which is configured to measure a voltage between the terminals 315a and 315b and the ground terminal 320. The measurement of this voltage results in a voltage measurement value V. The voltage sensor 325 is connected to the control unit 330 and adapted to generate a second information signal S(V), which conveys information about the voltage measurement value V to the control unit 330. The second information signal S(V) may, for example, be an analogue or a digital signal.

A main task of the control unit 330 of the SPD 300a is to determine whether to initiate a voltage limitation by the voltage limitation unit 310. The control unit 330 may initiate the voltage limitation by sending a predetermined control signal CS to the voltage limitation unit 310, which is then configured to execute the voltage limitation in response to receiving the control signal CS. According to embodiments of the invention it is suggested that the control unit 330 makes the determination on whether to initiate the voltage limitation based at least on the above-mentioned current measurement value I. The determination may also take into account the voltage measurement value V.

The embodiment of figure 3b is very similar to the one of figure 3a. For convenience, features that are essentially the same as in figure 3a have been referenced with the same reference numerals as in figure 3a and will not be discussed in detail a second time. A main difference is that the SPD 300b of figure 3b does not include a current sensor 327. Instead, the SPD 300b makes use of an external current sensor 329, that is, a current sensor that is not an integral part of the SPD 300b. The external current sensor 329 measures an input (or an output) current of a victim unit and sends the first information signal S(I) to the control unit 330 of the SPD 300b, here via an external measurement terminal 345. As before, the first information signal S(I) conveys information about the current measurement value I resulting from the measurement of the input (or output) current of the victim unit. Since the current measurement is performed outside the SPD 300b, there is no need to have two terminals 315a and 315b as in figure 3a. Instead the terminals 315a and 315b can be replaced with a single terminal 315.

The persons skilled in the art will appreciate that control units 330 of figures 3a and 3b may be implemented using standard circuit technologies, which exist in profusion. For example, the control units may be implemented with discrete electrical components, application specific integrated circuitry, programmable circuitry or with any combination thereof. The person skilled in the art will appreciate that control units could also be implemented fully or in part with on more processors programmed with suitable software. The persons skilled in the art will also appreciate that the voltage limitation units 310 may be implemented using conventional technologies.

In the embodiments illustrated in figures 3a and 3b, it has been suggested that the determination on whether to initiate the voltage limitation be based on the above-mentioned current measurement value I. A main advantage, as discovered by the inventors, with basing this determination on the current measurement value I is that this value is less sensitive to the above-mentioned clamping effect produced by an unknown impedance of the victim unit. An operation of the SPD 300a therefore becomes more reliable.

Moreover, in embodiments where the voltage measurement value V is not used, any technical features relating to the voltage measurement, such as the voltage sensor 325, can of course be dispensed with.

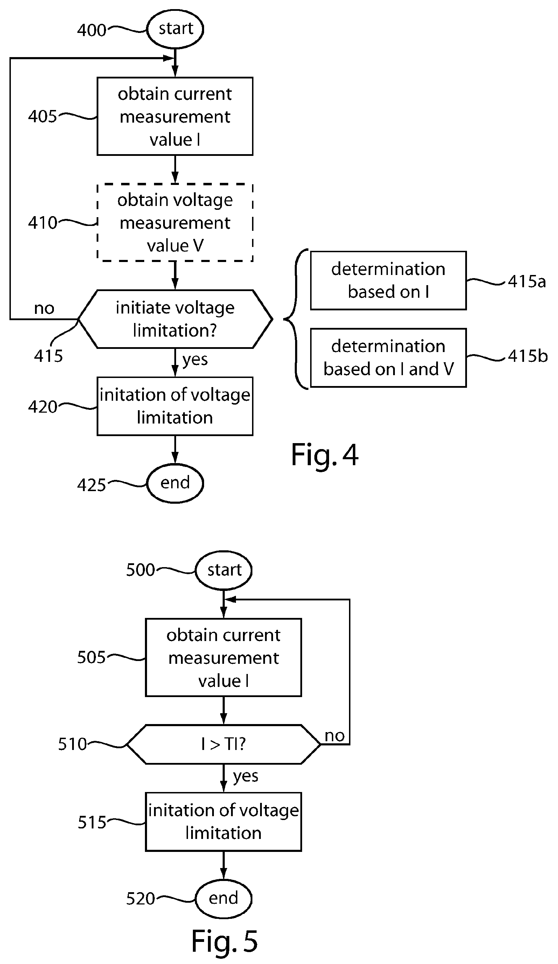

Figure 4 is a flowchart illustrating a method in an SPD according to an embodiment of the invention. It is here intended that the method of figure 4 could be carried out by the SPDs 300a and 300b illustrated in figures 3a and 3b; the method of figure 4 may, for example, be carried out by the control units 330. After a start 400, a current measurement value I is obtained, for example, by a control unit in the SPD at a block 405. The current measurement value results from a measurement of an input (or an output) current of a victim unit which is associated with the SPD, that is, a victim unit which is protected by the SPD. The current measurement value I may, for example, be obtained from a current sensor in the SPD or from an external current sensor, as discussed and illustrated earlier. At a block 410 (optional) the SPD also obtains a voltage measurement value V which reflects a potential difference between predetermined points in the SPD. For example, these points may be one or more terminals of the SPD and a ground terminal of the SPD, as discussed and illustrated earlier. The voltage measurement value V may be obtained from a voltage sensor. At block 415 a determination is made whether to initiate a voltage limitation in the SPD. In one example, indicated as block 415a, this determination may be done based on the current measurement value I only; and in this case block 410 may of course be dispensed with. In another example, indicated as block 415b, the determination may be done based on both the current measurement value I and the voltage measurement value V. If at the block 415 (415a, 415b) it is determined to initiate the voltage limitation, the method proceeds to a block 420, where an initiation of the voltage limitation is performed, for example, by generating and sending a predetermined control signal to the voltage limitation unit of the SPD. In case it is determined, instead, not to initiate the voltage limitation, the method may return to the beginning again and be repeated as described any number of times. If the voltage limitation is initiated, the method normally stops at a block 630, indicating that most SPDs must undergo a reset procedure, after having performed a voltage limitation, before its operation may be continued. Automatic resetting is, however, not excluded.

Figure 5 is a flowchart illustrating a method in an SPD according to a more specific embodiment of the invention. Again, it is here intended that the method of figure 5 could be carried out by the SPDs 300a and 300b illustrated in figures 3a and 3b; the method of figure 5 may, for example, be carried out by the control units 330. After a start 500, a current measurement value I is obtained, for example, by a control unit in the SPD at a block 505. The current measurement value I results from a measurement of an input (or an output) current of a victim unit which is associated with the SPD, that is, a victim unit which is protected by the SPD. The current measurement value I may, for example, be obtained from a current sensor in the SPD or from an external current sensor, as discussed and illustrated earlier. At a block 510, it is determined whether to initiate a voltage limitation. In this exemplary embodiment, the determination is based on the current measurement value I by comparing it with a current threshold value TI. The current threshold valued TI is intended to reflect an over current situation, that is, a situation when a magnitude of a current to or from the victim unit is clearly above normal operating currents. Therefore, at the block 510, it determined to initiate the voltage limitation in case the current measurement value I exceeds the current threshold value TI. If at the block 510 it is determined to initiate the voltage limitation, the method proceeds to a block 515, where an initiation of the voltage limitation is performed, for example, by generating and sending a predetermined control signal to the voltage limitation unit of the SPD. In case it is determined, instead, not to initiate the voltage limitation, the method may return to the beginning again and be repeated as described any number of times. If the voltage limitation is initiated, the method normally stops at a block 520, indicating that most SPDs must undergo a reset procedure, after having performed a voltage limitation, before its operation may be continued. Automatic resetting is, however, not excluded.

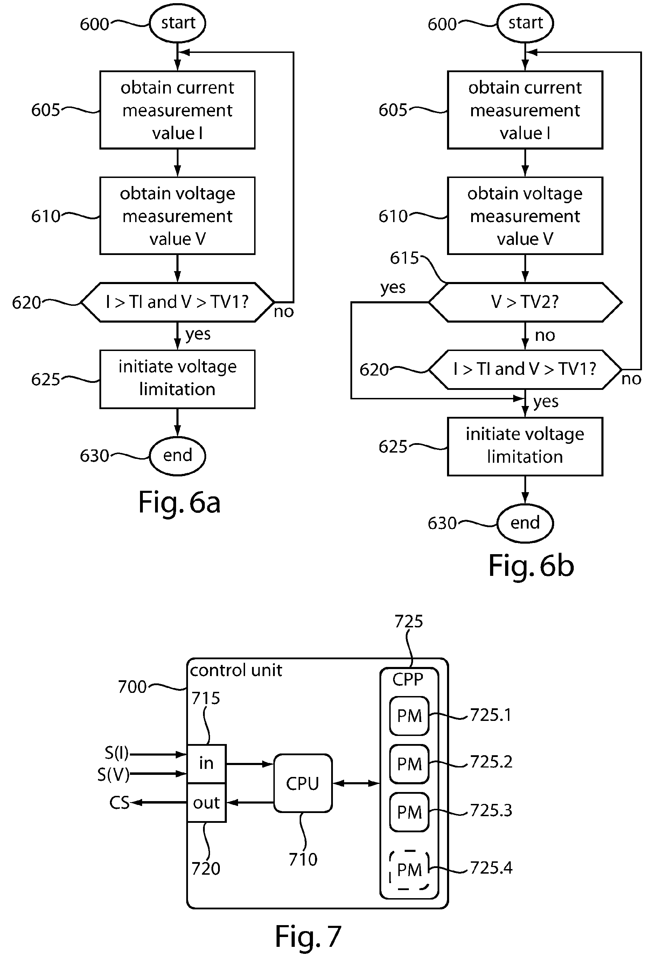

Figure 6a is a flowchart illustrating a method in an SPD according to another specific embodiment of the invention. It is yet again intended that the method of figure 6a could be carried out by the SPDs 300a and 300b illustrated in figures 3a and 3b; the method of figure 6a may, for example, be carried out by the control units 330. After a start 600, a current measurement value I is obtained, for example, by a control unit in the SPD at a block 605. The current measurement value results from a measurement of an input (or an output) current of a victim unit which is associated with the SPD, that is, a victim unit which is protected by the SPD. The current measurement value I may, for example, be obtained from a current sensor in the SPD or from an external current sensor, as discussed and illustrated earlier. At a block 610, the SPD also obtains a voltage measurement value V which reflects a potential difference between predetermined points in the SPD. For example, these points may be one or more terminals of the SPD and a ground terminal of the SPD, as discussed and illustrated earlier. The voltage measurement value may be obtained from a voltage sensor of the SPD. At block 620 a determination is made in order to determine whether to initiate a voltage limitation in the SPD. Here the determination is based on both the current measurement value I and the voltage measurement value V. Each measurement vale is compared to a respective threshold value. The current measurement value I is compared with a current threshold value TI and the voltage measurement value V is compared with a first voltage threshold value TV1. The current threshold value TI is intended to reflect an over current situation, that is, a situation when a magnitude of a current to or from the victim unit is clearly above normal operating currents. The first voltage threshold value TV1 is intended to allow avoidance of initiating the voltage limitation when increased currents are due to a short circuit in the victim unit. When a short circuit occurs in the victim unit, voltages will be close to zero. As understood by the inventors, it is not desirable to solve such situations by a voltage limitation in the SPD. It is instead better to rely on a fuse or circuit breaker which is closest to the load (victim unit) to open and clear the short circuit. Activating the SPD in a short circuit situation will only lower the overall impedance even further and may instead upset the selectivity between breakers and cause the opening of a fuse or circuit breaker on a higher level of an installation. This could result in complete interruption of power to a whole site. However, during proper surge conditions both currents and voltages are fairly high. Therefore, at block 620 of the method of figure 6a, it is determined to initiate the voltage limitation if the current measurement value I exceeds the current threshold value TI and the voltage measurement value V exceeds the first voltage threshold value TV1. If, at the block 620, it is determined to initiate the voltage limitation, the method proceeds to a block 625, where an initiation of the voltage limitation is performed, for example, by generating and sending a predetermined control signal to the voltage limitation unit of the SPD. In case it is determined, instead, not to initiate the voltage limitation, the method may return to the beginning again and be repeated as described any number of times. If the voltage limitation is initiated, the method normally stops at a block 630, indicating that most SPDs must undergo a reset procedure, after having performed a voltage limitation, before its operation may be continued. Automatic resetting is, however, not excluded.

Figure 6b is a flowchart that illustrates an exemplary method which is similar to the method of figure 6a. Features that are essentially the same as in figure 6a have therefore been given the same reference numerals as in figure 6a and will not be explained in detail a second time. A main difference between the method of figure 6b and the method of figure 6a is the introduction of a second voltage threshold value TV2. The second voltage threshold value TV2 is intended to reflect an over voltage situation, that is, a situation when a voltage over the victim is clearly above a normal operating voltage of the victim. At a block 615 of the method of figure 6b, the voltage measurement value V is compared with the second voltage threshold vale TV2 in order to determine whether to initiate the voltage limitation in the SPD. Consequently, if the voltage measurement value V exceeds the second voltage threshold value TV2, it is here determined to initiate the voltage limitation and the method proceeds directly to the block 625. Otherwise, the method proceeds to the block 620, which is exactly the same test as in figure 6a.

The method of figure 6b thus enhances the method of figure 6a by providing a complementary over voltage detection, which provides additional security.

In the methods illustrated above, various tests for determining whether to initiate the voltage limitation in an SPD are being presented. These tests may, however, be complemented by additional tests for determining whether to initiate the voltage limitation. For example, the method illustrated in figure 5 may be complemented by an over voltage detection similar to the one used in the method of figure 6b.

Figure 7 is a block diagram which illustrates an exemplary processor based implementation of a control unit 700 which may be used as a control unit in any of the embodiments disclosed and indicated above. The control unit 700 comprises here a digital processor 710, which operates based on programs stored in a computer program product (CPP) 725, such as a suitable memory device for storing computer software and digital data. The digital processor 710 is operatively connected to an input interface 715 and an output interface 720. The input interface is configured to receive the above-mentioned first information signal S(I) and the above-mentioned second information signal S(V) (optional). The output interface 720 is configured such that it is capable to output the above-mentioned control signal CS used in initiating a voltage limitation. The CPP 725 here stores a first program module 725.1 with software instructions used by the digital processor 710 to obtain information about the current measurement value I from the first information signal S(I) and (optional) to obtain information abut the voltage measurement value V from the second information signal S(V). The CPP 725 further stores a second program module 725.2 with software instructions used by the digital processor 710 to determine whether to initiate a voltage limitation. Here any of the methods disclosed or indicated above may be employed, of course. The CPP 725 also stores a third program module 725.3 with software instructions used by the digital signal processor 710 to perform the initiation of the voltage limitation in response to a determination to initiate the voltage taken by the software in the second program module 725.2. This will typically entail the generation of the control signal CS. The CPP 725 may optionally also store a fourth program module with additional software instructions used by the digital processor 710 to perform additional tasks, for example, execution of one or more miscellaneous tests for determining whether to initiate the voltage limitation.

Above, the invention has been illustrated with various embodiments. The embodiments are, however, only intended as nonlimiting examples, and a scope of protection is instead defined by the appending claims.

## Claims

1. A method for a surge protective device, SPD (300a;300b), the method comprising:
obtaining (405;505;605) a current measurement value from a measurement of an input or an output current of a victim unit associated with the SPD;
obtaining (410;610) a voltage measurement value from a measurement of a voltage over the SPD (300a;300b);
determining (415b;620) whether to initiate a voltage limitation in the SPD based on the current measurement value and the voltage measurement value; and
initiating (420) the voltage limitation, in case it is determined to initiate the voltage limitation, the method **characterised by** the step of determining (620) whether to initiate the voltage limitation comprising:
comparing (620) the current measurement value with a current threshold value;
comparing (620) the voltage measurement value with a first voltage threshold value; and
determining (620) to initiate the voltage limitation when the current measurement value exceeds the current threshold value and the voltage measurement value exceeds the first voltage threshold value.

2. The method according to claim 1, wherein the step of determining whether to initiate the voltage limitation comprises:
comparing (615) the voltage measurement value with a second voltage threshold value, the second voltage threshold value being greater than the first voltage threshold value; and
determining (615) to initiate the voltage limitation when the voltage measurement value exceeds the second voltage threshold value.

3. The method according to any one of the claims 1 to 2, wherein the step of obtaining (405;505;605) the current measurement value comprises obtaining the current measurement value from an external current sensor (329).

4. The method according to any one of the claims 1 to 2, wherein the step of obtaining (405;505;605) the current measurement value comprises obtaining the current measurement value from an internal current sensor (327).

5. A surge protective device, SPD (300a;300b), comprising:
a voltage limitation unit (310); and
a control unit (330) configured to determine whether to initiate a voltage limitation by the voltage limitation unit (310) and to initiate the voltage limitation in case the control unit (330) has determined to initiate the voltage limitation, the control unit (330) being configured to:
obtain a current measurement value from a measurement of an input or an output current of a victim unit associated with the SPD (300a;300b);
obtain a voltage measurement value from a measurement of a voltage over the SPD (300a;300b); and to
determine whether to initiate the voltage limitation based on the obtained current measurement value and the voltage measurement value, the SPD being **characterised in that** the control unit (330) is configured to:
compare the current measurement value with a current threshold value;
compare the voltage measurement value with a first voltage threshold value; and to
determine to initiate the voltage limitation when the current measurement value exceeds the current threshold value and the voltage measurement value exceeds the first voltage threshold value.

6. The SPD (300a;300b) according to claim 5, wherein:
the control unit (330) is configured to compare the voltage measurement value with a second voltage threshold value, the second voltage threshold value being greater than the first voltage threshold value; and wherein
the control unit (330) is configured to determine to initiate the voltage limitation when the voltage measurement value exceeds the second voltage threshold value.

7. The SPD (300a;300b) according to any one of the claims 5 to 6, wherein:
the SPD comprises a current sensor (327) configured to produce the current measurement value by measurement of the input or output current of a victim unit associated with the SPD; and wherein
the controller (330) is connected to the current sensor (327) for receiving a signal establishing the current measurement value.

## Patentansprüche

1. Verfahren für eine Überspannungsschutzvorrichtung, SPD (300a; 300b), wobei das Verfahren umfasst:
Erhalten (405; 505; 605) eines Strommesswertes aus einer Messung eines Eingangs- oder Ausgangsstroms einer Opfereinheit, welche der SPD zugeordnet ist;
Erhalten (410; 610) eines Spannungsmesswertes aus einer Messung einer Spannung über die SPD (300a; 300b);
Bestimmen (415b; 620), auf der Basis des Strommesswertes und des Spannungsmesswertes, ob eine Spannungsbegrenzung in der SPD gestartet werden muss; und
Starten (420) der Spannungsbegrenzung, im Falle dass man bestimmt, dass die Spannungsbegrenzung gestartet werden muss, wobei das Verfahren **gekennzeichnet ist durch** den Schritt des Bestimmens (620), ob die Spannungsbegrenzung gestartet werden muss, umfassend:
Vergleichen (620) des Strommesswertes mit einem Stromschwellenwert;
Vergleichen (620) des Spannungsmesswertes mit einem ersten Spannungsschwellenwert; und
Bestimmen (620), dass die Spannungsbegrenzung gestartet wird, wenn der Strommesswert den Stromschwellenwert überschreitet und der Spannungsmesswert den ersten Spannungsschwellenwert überschreitet.

2. Verfahren nach Anspruch 1, wobei der Schritt des Bestimmens, ob die Spannungsbegrenzung gestartet wird, umfasst:
Vergleichen (615) des Spannungsmesswertes mit einem zweiten Spannungsschwellenwert, wobei der zweite Spannungsschwellenwert größer als der erste Spannungsschwellenwert ist; und
Bestimmen (615), dass die Spannungsbegrenzung gestartet wird, wenn der Spannungsmesswert den zweiten Spannungsschwellenwert überschreitet.

3. Verfahren nach einem der Ansprüche 1 bis 2, wobei der Schritt des Erhaltens (405; 505; 605) des Strommesswertes das Erhalten des Strommesswertes von einem externen Stromsensor (329) umfasst.

4. Verfahren nach einem der Ansprüche 1 bis 2, wobei der Schritt des Erhaltens (405; 505; 605) des Strommesswertes das Erhalten des Strommesswertes von einem internen Stromsensor (327) umfasst.

5. Überspannungsschutzvorrichtung, SPD (300a; 300b), umfassend:
eine Spannungsbegrenzungseinheit (310); und
eine Steuereinheit (330), welche konfiguriert ist, um zu bestimmen, ob eine Spannungsbegrenzung durch die Spannungsbegrenzungseinheit (310) gestartet werden muss und um die Spannungsbegrenzung zu starten, falls die Steuereinheit (330) entschieden hat, dass die Spannungsbegrenzung starten muss, wobei die Steuereinheit (330) konfiguriert ist zum:
Erhalten eines Strommesswertes aus einer Messung eines Eingangs- oder Ausgangsstroms einer Opfereinheit, welche der SPD (300a; 300b) zugeordnet ist;
Erhalten eines Spannungsmesswertes aus einer Messung einer Spannung über die SPD (300a; 300b); und zum
Bestimmen, auf der Basis des Strommesswertes und des Spannungsmesswertes, ob die Spannungsbegrenzung gestartet werden muss; wobei die SPD **dadurch gekennzeichnet ist, dass** die Steuereinheit (330) konfiguriert ist, zum:
Vergleichen des Strommesswertes mit einem Stromschwellenwertes;
Vergleichen de Spannungsmesswertes mit einem ersten Spannungsschwellenwertes; und zum
Bestimmen, dass die Spannungsbegrenzung gestartet werden muss, wenn der Strommesswert den Stromschwellenwert überschreitet und der Spannungsmesswert den ersten Spannungsschwellenwert überschreitet.

6. SPD (300a; 300b) nach Anspruch 5, wobei:
die Steuereinheit (330) konfiguriert ist zum Vergleichen des Spannungsmesswertes mit einem zweiten Spannungsschwellenwertes, wobei der zweite Spannungsschwellenwert größer als der erste Spannungsschwellenwert ist; und wobei
die Steuereinheit (330) konfiguriert ist zum Bestimmen, dass die Spannungsbegrenzung gestartet werden muss, wenn der Spannungsmesswert den zweiten Spannungsschwellenwert überschreitet.

7. SPD (300a; 300b) nach einem der Anspruch 5 bis 6, wobei:
die SPD einen Stromsensor (327) umfasst, welcher konfiguriert ist zum Erzeugen des Strommesswertes durch Messen des Eingangs- oder Ausgangsstroms einer Opfereinheit, welche der SPD zugeordnet ist; und wobei
der Controller (330) mit dem Stromsensor (327) verbunden ist, um ein Signal zu empfangen, welches den Strommesswert festlegt.

## Revendications

1. Procédé ayant trait à un dispositif de protection contre les surtensions (SPD) (300a, 300b), le procédé comprenant les étapes consistant à :
obtenir (405, 505, 605) une valeur de mesure de courant à partir d'une mesure d'un courant d'entrée ou de sortie d'une unité victime qui est associée au SPD,
obtenir (410, 610) une valeur de mesure de tension à partir d'une mesure de tension sur le SPD (300a, 300b),
déterminer (415b, 620) s'il faut initier une limitation de tension dans le SPD sur la base de la valeur de mesure de courant et la valeur de mesure de tension, et
dans le cas où il est déterminé qu'il faut initier la limitation de tension, initier (420) la limitation de tension,
le procédé étant **caractérisé par** l'étape servant à déterminer (620) s'il faut initier la limitation de tension consiste à :
comparer (620) la valeur de mesure de courant à une valeur seuil de courant,
comparer (620) la valeur de mesure de tension à une première valeur seuil de tension, et
si la valeur de mesure de courant est supérieure à la valeur seuil de courant et la valeur de mesure de tension est supérieure à la première valeur seuil de tension, déterminer (620) l'initiation de la limitation de tension.

2. Procédé selon la revendication 1, dans lequel l'étape consistant à déterminer s'il faut initier la limitation de tension comprend les opérations consistant à :
comparer (615) la valeur de mesure de tension avec une seconde valeur seuil de tension, la seconde valeur seuil de tension étant plus grande que la première valeur seuil de tension, et
si la valeur de mesure de tension est supérieure à la seconde valeur seuil de tension, déterminer (615) l'initiation de la limitation de tension.

3. Procédé selon l'une des revendications 1 à 2, dans lequel l'étape consistant à obtenir (405, 505, 605) la valeur de mesure de courant consiste à obtenir la valeur de mesure de courant à partir d'un capteur de courant externe (329).

4. Procédé selon l'une des revendications 1 à 2, dans lequel l'étape consistant à obtenir (405, 505, 605) la valeur de mesure de courant consiste à obtenir la valeur de mesure de courant à partir d'un capteur de courant interne (327).

5. Dispositif de protection contre les surtensions (SPD) (300a, 300b) comprenant :
une unité de limitation de tension (310), et
un bloc de commande (330) conçu pour déterminer s'il faut initier une limitation de tension par l'unité de limitation de tension (310) et pour initier la limitation de tension dans le cas où le bloc de commande (330) a décidé d'initier la limitation de tension, le bloc de commande (330) étant conçu pour :
obtenir une valeur de mesure de courant à partir d'une mesure d'un courant d'entrée ou de sortie d'une unité victime qui est associée au SPD (300a, 300b),
obtenir une valeur de mesure de tension à partir d'une mesure de tension sur le SPD (300a, 300b), et pour
déterminer s'il faut initier la limitation de tension sur la base de la valeur de mesure de courant et la valeur de mesure de tension,
le SPD étant **caractérisé en ce que** le bloc de commande (330) est conçu pour :
comparer la valeur de mesure de courant à une valeur seuil de courant,
comparer la valeur de mesure de tension à une première valeur seuil de tension, et
si la valeur de mesure de courant est supérieure à la valeur seuil de courant et si la valeur de mesure de tension est supérieure à la première valeur seuil de tension, déterminer l'initiation de la limitation de tension.

6. Le SPD (300a, 300b) selon la revendication 5, dans lequel :
le bloc de commande (330) est conçu pour comparer la valeur de mesure de tension avec une seconde valeur seuil de tension, la seconde valeur seuil de tension étant plus grande que la première valeur seuil de tension, et
le bloc de commande est conçu pour déterminer d'initier la limitation de tension si la valeur de mesure de tension est supérieure à la seconde valeur seuil de tension.

7. Le SPD (300a, 300b) selon l'une quelconque des revendications 5 à 6, dans lequel :
le SPD comprend un capteur de courant (327) conçu pour produire la valeur de mesure de courant par la mesure du courant d'entrée ou de sortie d'une unité victime associée au SPD, et
le bloc de commande (330) est connecté au capteur de courant (327) pour recevoir un signal établissant la valeur de mesure de courant.
